# EUROPEAN PATENT SPECIFICATION

(11) **EP 2 300 742 B1**
(45) Date of publication and mention of the grant of the patent: **19.02.2020**
(21) Application number: 09763039.6
(22) Date of filing: 03.04.2009
(51) Int. Cl.: F16K 17/16, F16K 37/00

(54) **CONTROLLED SAFETY PRESSURE RESPONSE SYSTEM**
GESTEUERTES SICHERHEITSDRUCKREAKTIONSSYSTEM
SYSTÈME DE SÉCURITÉ ANTI-SURPRESSIONS CONTRÔLÉ

(30) Priority: 11.06.2008 US 155915
(43) Date of publication of application: 30.03.2011
(60) Divisional application: 13002832.7
(73) Proprietor: BS&B SAFETY SYSTEMS, INC., Tulsa OK 74145 (US)
(72) Inventor: BRAZIER, Geof, Woodbury MN 55125 (US); CLARK, John, P. III, Tulsa OK 74132 (US); SMALLWOOD, John, E., Tulsa OK 74135-6673 (US)
(74) Representative: Grünecker Patent- und Rechtsanwälte PartG mbB
(86) International application number: PCT/US2009/039463
(87) International publication number: WO 2009/151747

(56) References cited:
- DE-A1- 4 423 979
- GB-A- 1 336 303
- US-A- 4 830 052
- US-A1- 2003 071 736

## Description

### Field

This invention relates to a controlled system for monitoring and relieving pressure in a pressurized container. More particularly, the present invention relates to a controlled system for a pressurized container that includes a non-reclosing pressure release device, wherein an activating mechanism is configured to open the pressure release device in response to a signal from a controller.

### Background

Containers, such as, for example, systems, piping, or tanks, that contain a fluid that is pressurized or that may be pressurized often include pressure reduction equipment that is designed to ensure the safety of the container and/or to provide information about the operation of the system. This pressure reduction equipment may include, for example, pressure relief devices, pressure release devices, pressure control systems, pressure indicating devices, pressure driven switching devices, temperature indicating devices, fluid pH level indicating devices, and vibration indicating devices.

Co-owned U.S. Patent Application Publication No. US 2003/0071736, which discloses according to the opinion of the Examining Division of the European Patent Office all the features of the preamble according to claim 1, is directed to a monitoring system for a pressurized container and disclose a known container and known pressure reduction equipment. Specifically, that publication purports to disclose a system and method of monitoring a pressurized container having an auxiliary device. The system includes a sensor operable to provide a signal representative of at least one operating condition of the pressurized container. The system also includes a control operable to receive the signal from the sensor and generate a warning when the sensed operating condition will impact the operation of the auxiliary device.

U.S. Patent No. 4,830,052 also discloses a known container and known pressure reduction equipment. Specifically, that patent purports to disclose a safety device for limiting the pressure of a fluid to a predetermined value, which comprises a pre-shaped diaphragm having a downstream convex face and an upstream convex face mounted as a closing or sealing device in a pipe. A first knife faces the convex face of the diaphragm at such a distance that a predetermined pressure exerted by the fluid on the concave face of the diaphragm brings the latter into contact with the knife which then causes a bursting of the diaphragm. A second knife is fitted to face the concave face of the diaphragm and a mechanism is provided for making the second knife strike against the diaphragm in order to bring about the tearing thereof when the concave face of the diaphragm is exposed by the fluid to a pressure below said predetermined pressure. The first knife has a passive operating mode, but the second knife has an active operating mode. According to that patent, with the latter mode, it is possible to burst the diaphragm at a pressure value which is well below that at which the diaphragm is burst by the first knife.

GB patent No. 1336303 discloses a pressure relief device for use in emergency conditions. Within a reaction vessel, a pressure sensing device is placed, which transmits the pressure signal via an electrical circuit to a small disc of a gas storage cylinder. When a preselected critical pressure in the vessel is sensed by the pressure device, the small disc of the gas storage cylinder is detonated by the electrical circuit. Pressurized gas of the gas storage cylinder will then fill a tube and space between two discs. The release of the gas bursts both discs, thus providing a free passage for the excess pressure in the vessel.

DE 4423979 discloses a pressure release device for application in chemical industry. An outlet for cooling fluid is blocked by a blocking element, which is brazed to the outlet. A pyrotechnic charge is located within the blocking element. When a critical operating condition within a pressurized facility is reached, a triggering signal is transmitted to the pyrotechnic charge by a signal cable. Due to the heat development upon ignition of the pyrotechnic charge, the blocking element will be separated from the outlet and provide a fluid passage.

Pressure relief devices are commonly used as safety devices to prevent fluid containers from experiencing potentially hazardous over-pressure or under-pressure conditions. The pressure relief devices are designed to activate, or open, when the pressure of the fluid within the container reaches a predetermined pressure limit that is indicative of an over-pressure condition. The activation of the pressure relief device creates a vent path through which fluid may escape to relieve the over-pressure situation in the pressurized container.

A pressure relief device, which may include, for example, rupture disks, pressure relief valves, pressure safety valves, control valves, butterfly valves, gate valves, globe valves, diaphragm valves, buckling pin devices, tank vents, explosion panels, or other such devices, may be connected to the container so that at least a portion of the pressure relief device is exposed to the fluid within the container. When the fluid reaches or exceeds the predetermined pressure limit, the force of the fluid on the pressure relief device acts on the pressure relief device to activate the pressure relief device, thereby creating an opening. Fluid may then escape from the container through the opening to relieve the over-pressure condition.

Pressure release devices are commonly used to allow the movement of a pressurized fluid from one container to another container or system. The pressure release devices, which may be, for example, control valves, butterfly valves, gate valves, globe valves, ball valves, diaphragm valves, or other such devices, are connected to the container so that at least a portion of the pressure release device is exposed to the fluid within the container. The pressure release devices are designed to activate, or open, on demand. This activation can be manual or automatic, based upon the requirements of the user. When fluid is required to be discharged from the container, the pressure release device may be activated to create an opening. The activation of the pressure release device creates a vent path through which fluid may escape from the pressurized container.

A combination of different types of pressure reduction equipment may be included in a container. For example, a pressure relief device may be engaged with the system to provide protection from an over pressure situation within the particular container. A pressure release device may be engaged with the container to allow the discharge of fluid from the container upon the command of an operator or an appropriate automatic sensing system when certain internal or external conditions are experienced that warrant discharge of the pressurized fluid from the container.

Each pressurized container is designed to withstand a maximum allowable working pressure. If the pressure of the fluid within the container were to exceed this maximum allowable working pressure without activation of the pressure reduction device, the container could become unsafe. To ensure that the pressure of the container does not exceed the maximum allowable working pressure and the relevant design code permitted overpressure, a pressure reduction device that is configured to activate at a pressure that is within a certain tolerance (e.g. 105%) of the maximum allowable working pressure may be engaged in the container.

Ensuring that the pressure reduction equipment activates at the rated pressure, or within a manufacturing tolerance of the rated pressure, is of great importance. If the pressure reduction device activates at a pressure that is higher than the rated pressure, the fluid pressure may exceed the maximum allowable working pressure. If the pressure reduction device activates at a pressure that is lower than the rated pressure, the activation may interfere with the normal operation of the system and could potentially result in the premature loss of fluid from the system.

The pressurized containers may further include a pressure control system that is designed to prevent the pressurized container from experiencing potentially hazardous over-pressure or under-pressure conditions. These pressure control systems monitor the pressure of the fluid within the container. When the fluid pressure approaches a predetermined pressure limit that is indicative of an impending over-pressure or under-pressure condition, the pressure control system may activate a control device, such as, for example, a control valve that injects a chemical reaction agent, catalyst, quenching agent, or stabilizer into the working fluid. The activation of the pressure control system may thereby avoid the need to create a vent path to reduce the pressure of the fluid in the pressurized system. Alternatively, the pressure control system may activate a pressure release device, such as, for example, a butterfly valve, a ball valve, or a globe valve, to release fluid in a sufficient quantity to avoid or limit the over-pressure or under-pressure condition. Thus, the control system may automatically handle the opening and closing of a vent path in a pressure release device to reduce the pressure within the container.

The pressurized containers may use a combination of pressure control devices and pressure reduction devices. These pressure control devices monitor the pressure of the fluid within the container. When the fluid pressure reaches a level that may be too low or too high for the proper function of the pressure release device, the pressure control system may activate an annunciation system to alert the user to the improper operating condition of the pressurized container. A pressure relief device may additionally be used to provide automatic release of fluid in a sufficient quantity to avoid or limit an overpressure or under-pressure condition.

The pressurized containers may also include a pressure indicating device that identifies the depletion of the fluid within the container. These pressure indicating devices can be used to prevent the containers from experiencing potentially low or high pressure conditions that might inconvenience the user. The pressure indicating devices are designed to trigger a response, such as the opening of a supply valve, when the pressure of the fluid within the system reaches a predetermined low pressure limit that is indicative of the fluid becoming depleted. Such pressure indication can also trigger a response when the pressurized container is reaching a potentially damaging vacuum condition.

The pressurized containers may further include a pressure indicating device that identifies the increase in quantity of the fluid within the container. These pressure indicating devices can prevent the containers from experiencing potentially high pressure conditions that might damage the container. The pressure indicating devices are designed to trigger a response, such as, for example, the opening or closing of a supply valve, when the pressure of the fluid within the system reaches a predetermined pressure limit that is indicative of the system becoming filled with fluid.

It has been found that the operating conditions of the fluid container, such as, for example, the temperature and pressure of the fluid, may have an impact on the operation of the above-described pressure reduction devices and information providing devices that may be engaged with the container. For example, the operating conditions of the container may have an impact on the pressure at which a pressure relief device activates. In some situations, the operating conditions of the container may cause the pressure relief device to activate at a pressure that is lower than expected. In other situations, the operating conditions of the container may cause the pressure relief device to activate at a pressure that is higher than expected.

In a container that uses a rupture disk as a pressure relief device, the temperature of the fluid in the container may impact the pressure at which the rupture disk will activate. The activation pressure of the rupture disk is determined, in part, by the physical properties of the material used to form to the rupture disk. Excessive heat or excessive cold may alter the physical properties of the material, thereby altering the activation pressure of the rupture disk. Other operating conditions, such as, for example, pressure fluctuations, pressure levels, vibration frequencies and amplitudes, and acidity levels could also have an impact on the activation pressure of the rupture disk or other such pressure relief device.

Similarly, the operating conditions of the container may also impact the operation of a pressure release device, a pressure control device, and/or a pressure indicating device. For example, excessive pressures or temperatures may impact the ability of a pressure control device to deliver a stabilizing agent to a chemical reaction process before an over-pressure condition is reached. In addition, the operating conditions may prevent a pressure indicating device from providing accurate pressure indications.

Early identification of an operating condition that may impact the operation of a pressurized container fluid system or an associated pressure release devices, pressure relied device, and/or pressure control device may allow an operator to take corrective action. For example, the affected device could be repaired or replaced after experiencing a potentially problematic operating condition. In this manner, the reliability of the pressurized container fluid system and the associated safety and informational systems could be maintained.

In light of the foregoing, there is a need for a controlled system for monitoring and relieving pressure in a pressurized container, wherein a non-reclosable pressure relief device may be activated by a controlled activating mechanism.

The aforementioned problems are solved by a controlled pressure release system according to claim 1.

Preferred embodiments are laid down in the dependent claims.

### SUMMARY

To attain the advantages and in accordance with the purposes of the present invention, as embodied and broadly described herein, one embodiment is directed to a controlled pressure release system for a pressurized container having a non-reclosing pressure release device. The system includes an activating mechanism that is configured to open the pressure release device. A sensor, which is operatively disposed in the pressurized container, is configured to generate a monitoring signal representative of at least one operating condition of the pressurized container. A control is configured to receive the monitoring signal and to trigger the activating mechanism when the at least one operating condition of the pressurized container system reaches a predetermined limit.

In another embodiment, a controlled pressure release system includes a non-reclosing pressure release device and an activating mechanism configured to open the non-reclosing pressure release device. A sensor operatively disposed in the pressurized container is configured to monitor at least one operating condition of the pressurized container and to transmit a signal representing the at least one operating condition. A control configured to receive the monitoring signal may trigger the activating mechanism when the operating condition exceeds a predetermined limit. The non-reclosing pressure release device may also be configured to inject a fluid into the pressurized container when the non-reclosing pressure release device is opened.

In yet another embodiment, a controlled pressure release system includes a non-reclosing pressure release device and an activation mechanism configured to open the pressure release device. A sensor configured to monitor at least one operating condition of the pressurized container is configured to generate a signal indicative of the at least one operating condition. A monitor is configured to monitor the signal. A trigger is configured to activate the activation mechanism when the monitor measures a signal indicative of a limiting condition.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate one embodiment of the invention and together with the description, serve to explain the principles of the invention. In the drawings,
FIG. 1 is a schematic and diagrammatic illustration of a monitoring system for a pressurized container in accordance with an example useful for understanding the present invention;
FIG. 2 is a schematic and diagrammatic illustration of one example of a monitoring system for a pressure relief device in accordance with an example useful for understanding the present invention;
FIG. 3 is a schematic and diagrammatic illustration of a control for a monitoring system according to an example useful for understanding the present invention;
FIG. 4 is a flowchart illustrating a method of monitoring inlet pressure conditions experienced by a pressure relief device in accordance with an example useful for understanding the present invention;
FIG. 5 is a flowchart illustrating a method for monitoring inlet and outlet pressure conditions experienced by a pressure relief device in accordance with an example useful for understanding the present invention;
FIG. 6 is a flowchart illustrating a method for monitoring temperature conditions experienced by a pressure relief device in accordance with an example useful for understanding the present invention;
FIG. 7 is a schematic and diagrammatic illustration of a controlled system for relieving pressure in a pressurized container in accordance with an embodiment of the present invention;
FIG. 8 is a schematic and diagrammatic illustration of a controlled system for relieving pressure in a pressurized container in accordance with an example useful for understanding the present invention, illustrating a fluid to be injected;
FIG. 9 is a schematic and diagrammatic illustration of a controlled system for relieving pressure in a pressurized container in accordance with an example useful for understanding the present invention, illustrating a pyrotechnic-type activating mechanism; and
FIG. 10 is a schematic and diagrammatic illustration of a controlled system for relieving pressure in a pressurized container in accordance with an example useful for understanding the present invention, illustrating a buckling pin.

### DESCRIPTION OF THE EMBODIMENTS

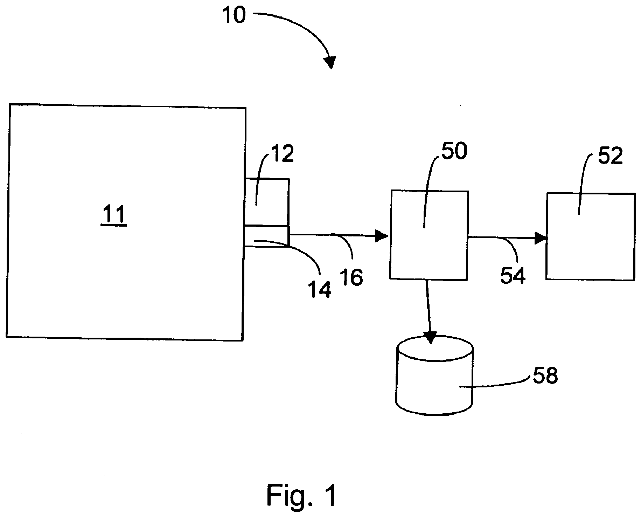

An exemplary embodiment of a known monitoring system for a pressurized container is shown in FIG. 1 and is designated generally by reference number 10. FIG. 1 represents background art that is useful for understanding the invention.

In FIG. 1, a monitoring system for a pressurized container is provided. A monitoring system may be used with any pressurized container that includes an auxiliary device, such as, for example, a safety device, a pressure reduction device, a pressure control system, or an information-providing device. Such pressure reduction devices may include, for example, pressure relief devices and pressure release devices. Such information-providing devices may include, for example, pressure indicating devices and devices that indicate when a container is full or empty.

As illustrated in FIG. 1, an auxiliary device 12 is engaged with a container 11 that contains a pressurized fluid or a fluid that may be pressurized. For the purposes of the present disclosure, the term "container" is used broadly and is intended to include any type of pressurized system, piping, tank, or other such apparatus. Auxiliary device 12 is exposed to the fluid within container 11 so that the auxiliary device may perform its intended function. For example, auxiliary device 12 may be a pressure relief device that is configured to activate, or open, when a fluid within the system reaches a predetermined pressure level. The pressure relief device may be, for example, a rupture disk, a pressure relief valve, a pressure safety valve, a control valve, a buckling pin device, a tank vent, an explosion panel, or another similar device.

Alternatively, auxiliary device 12 may be a pressure reduction device that is configured to activate in response to an external force. The pressure reduction device may activate manually in response to a command from an operator or automatically in response to a signal from an automatic control system. The pressure reduction device may be activated when the operator or automatic control system detects a condition that warrants release of fluid from container 11.

As is known in the art, the pressure relief device may be engaged with container 11 in any manner that will expose an operative portion of the pressure relief device to the fluid contained within container 11. When the fluid in the container reaches the predetermined pressure level, the pressure relief device will activate to create a vent path, or opening, through which fluid may escape from the container to reduce the pressure in the container. Multiple pressure relief devices may be engaged at different locations within or adjacent container 11.

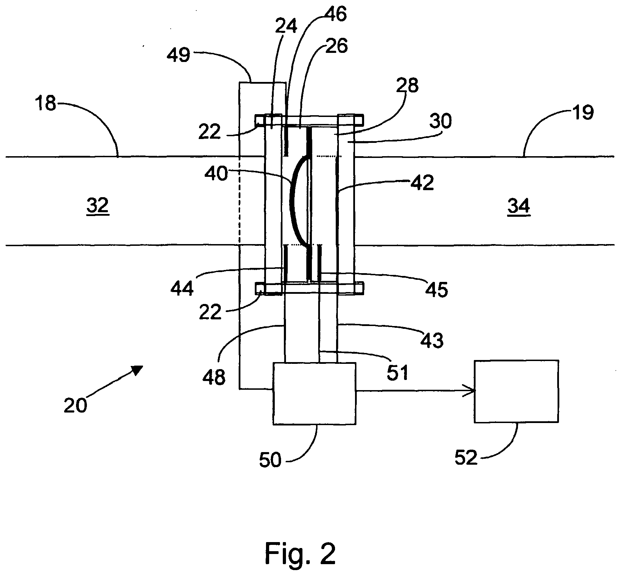

In another known monitoring system illustrated in FIG. 2, which represents background art that is useful for understanding the invention, the auxiliary device 12 is a rupture disk 40. Rupture disk 40 is sealingly engaged between an inlet safety head 26 and an outlet safety head 28. Inlet and outlet safety heads 26, 28 are then secured between an inlet pipe 18 and an outlet pipe 19. Rupture disk 40 may be engaged with container 11 in any manner readily apparent to one skilled in the art, such as, for example, between tri-clamp sanitary flanges, between screw-threaded connections, welded to the container, or directly between pipe flanges.

Inlet pipe 18 includes an inlet flange 24 and outlet pipe 19 includes an outlet flange 30. A series of bolts 22 secure inlet flange 24 to outlet flange 30. When bolts 22 are tightened, a force is exerted through inlet flange 24 and inlet safety head 26 and outlet flange 30 and outlet safety head 28. This force sealingly engages the rupture disk 40 with container 11.

In FIG. 2, inlet pipe 18 has an opening 32 that provides a fluid pathway to rupture disk 40. Inlet safety head 26 includes an opening that exposes a rupturable portion of rupture disk 40 to the fluid within container 11. The rupturable portion of rupture disk 40 is configured to rupture when the pressure differential across the rupturable portion of the rupture disk reaches a predetermined limit. The rupture of rupture disk 40 creates a pathway through which fluid may escape from container 11.

Outlet pipe 19 has an opening 34 that provides a vent path for fluid that escapes container 11 through the burst and therefore open rupture disk. Outlet pipe 19 may lead to an overflow reservoir (not shown). Alternatively, if the fluid within container 11 is not hazardous, rupture disk 40 may vent directly to the environment or outlet pipe 19 may direct the escaping fluid to the environment.

With reference to FIG. 1, a sensor 14 is operatively disposed in container 11 to monitor at least one operating condition of container 11. Alternatively, multiple sensors may be operatively disposed in container 11 and/or auxiliary device 12 to monitor several operating conditions simultaneously at the inlet, outlet, or both the inlet and outlet of the device. The monitored operating conditions may include, for example, inlet pressure, outlet pressure, fluid temperature, fluid pH level/acidity level, vibration frequency and/or amplitude, and fluid level. The present invention contemplates that other operating conditions may also be monitored.

Sensor 14 generates a signal 16. Signal 16 may include a representation of a single operating condition of container 11. Alternatively, signal 16 may include a representation of multiple operating conditions of container 11.

As illustrated in FIG. 2, a first pressure sensor 44 may be exposed to the system fluid on the inlet side of rupture disk 40. As shown, first pressure sensor 44 may be disposed in inlet safety head 26. Alternatively, first pressure sensor 44 may be disposed further upstream of inlet safety head 26 or may be attached directly to pressurized container 11. First pressure sensor 44 generates a signal that is representative of the fluid pressure exerted on the inlet side of rupture disk 40.

A second pressure sensor 45 may be exposed to the system fluid on the outlet side of rupture disk 40. As shown, second pressure sensor 45 may be disposed in outlet safety head 28. Alternatively, second pressure sensor 45 may be disposed further downstream of outlet safety head 28. Second pressure sensor 45 generates a signal that is representative of the fluid pressure exerted on the outlet side of rupture disk 40.

In addition, a temperature sensor 46 may be exposed to the system fluid on the inlet side of rupture disk 40. As shown, temperature sensor 46 may be disposed in inlet safety head 26. Alternatively, temperature sensor 46 may be disposed further upstream of inlet safety head 26 or may be attached directly to pressurized container 11. Temperature sensor 46 generates a signal that is representative of the sensed temperature of the system fluid.

A pressure event sensor 42 may be operatively engaged with pressure relief device 12. In the background art illustrated in FIG. 2, pressure event sensor 42 is a "burst sensor" that generates a signal when rupture disk 40 activates. The burst sensor may be a "broken wire" burst sensor, such as, for example, the Burst Alert Sensor manufactured by BS&B Safety Systems, Inc. Different types of pressure event sensors, such as, for example, leak sensors, magnetically activated proximity switches, and pressure switches, that are adapted for use with different types of pressure relief or control devices may also be used.

As illustrated in FIG. 2, a pressure event sensor 42 is positioned on outlet safety head 28. Pressure event sensor 42 includes a wire 43 disposed proximate outlet safety head 28. Wire 43 is connected to a power source (not shown), which may be, for example, a battery. The power source and wire 43 form an electrically-powered circuit that traverses the outlet flow path from rupture disk 40.

When rupture disk 40 ruptures and allows fluid to flow into outlet pipe 19, the force of the fluid, the shock wave generated in the piping due to the rupture of the rupture disk, physical contact with the ruptured disk, or a combination of these events will break wire 43. In addition, if rupture disk 40 exhibits leakage, the resulting fluid build-up against pressure event sensor 42 would be sufficient to break an appropriately configured wire 43. When wire 43 breaks, the electrically-powered circuit changes from a closed circuit to an open circuit. The opening of the circuit is a signal that indicates that the pressure relief device has activated or is leaking.

Sensor 14 may be of any type readily apparent to one skilled in the art. For example, sensor 14 may be a fluid pH/acidity level sensor, a vibration sensor, of a fluid level sensor.

As illustrated in the background art shown in FIG. 1, a control 50 is operatively connected to sensor 14 to receive the generated signal 16. Control 50 processes signal 16 to identify operating conditions that warrant sending a warning to an operator, such as when the operation conditions may impact the operation of auxiliary device 12. Control 50 may generate a warning when an operator should be alerted to an operating condition that may impact the operation of the auxiliary device.

Sensor 14 may send signal 16 to control 50 through a hard-wire connection. Alternatively, sensor 14 may include a transmitter that sends a wireless signal 16 to control 50. The wireless communication may be a transmission that has a frequency of between about 902 and 928 MHz. The wireless communication may occur at any licensed or unlicensed RF frequency band or at some other acceptable frequency.

The wireless communication may use any one of a number of standard communication protocols, including, for example: short range wireless standards and techniques such as bluetooth; 3.sup.rd generation digital phone service; global system for mobile communication "GSM"/code-division multiple access "CDMA"; short message service "SMS"; wireless Ethernet "Wi-Fi"; or wireless application protocol "WAP." In addition, the wireless communication may be configured for "frequency hopping," where the frequency that the wireless communication uses varies between successive transmissions. The wireless communication may utilize any common "frequency hopping" algorithm readily apparent to one skilled in the art.

Control 50 may also be connected to an internal or external memory 58. Control 50 may store a history of the operating conditions experienced by pressurized container 11 and/or auxiliary device 12 in memory 58. The stored history may be a compilation of raw data such as a history of sensor 14 sent via signal 16. Alternatively, control 50 may process signals 16 and store only certain data in memory 58 that is identified during processing.

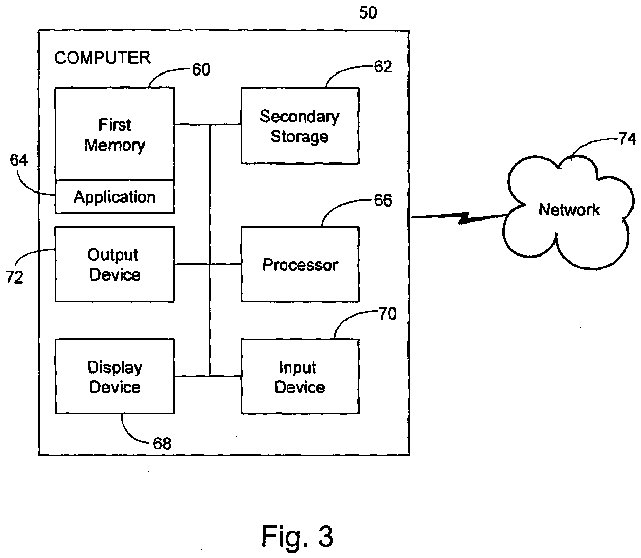

Control 50 may include a processor or computer. FIG. 3 depicts in more detail a computer suitable for use with control 50. As shown, the computer may have a first memory 60, a secondary storage 62, a processor 66, such as a central processing unit, an input device 70, and an output 72. The computer may also include a display device 68. First memory 60 and secondary storage 62 may store applications, such as application 64, or information for execution and use by processor 66. The present invention contemplates that the computer may be connected to a network 74, such as the Internet.

Although the computer is depicted with various components, one skilled in the art will appreciate that this computer can contain additional or different components. Furthermore, these aspects can also be stored on or read from other types of computer program products or computer-readable media, such as computer chips and secondary storage devices, including hard disks, floppy disks, or CD-ROM, or other forms of RAM or ROM. These aspects may also include modules, implemented in software, hardware, or a combination. In addition, the computer-readable media may include instructions for controlling a computer system to perform a particular method.

In the background art illustrated in FIG. 2, control 50 is configured to receive signals representative of the operating conditions of the container and perhaps also the auxiliary device(s) as generated by the temperature, pressure, and burst sensors. Control 50 is connected to first pressure sensor through wire 48, to second pressure sensor through wire 51, to temperature sensor through wire 49, and to pressure event sensor 42 through wire 43. Each of the sensors may generate and transmit signals representative of their respective function on either a continuous or periodic basis. Control 50 receives each signal and processes the signals. The signals may be transmitted through a hard-wire connection or through wireless communication to control 50. The signals generated by each of the condition sensors may be transmitted to control 50 through a bus system, such as, for example, a Fieldbus, Modbus, or a Profibus, that uses a single two-wire connection to distribute the output from an array of applied sensors. Control 50 may be programmed to handle multiple auxiliary devices and pressure containers.

Each of the sensors and control 50 may include a device configured to both send and receive signals, such as, for example, a transceiver. This two-way communication ability may be used to verify that the system is functioning properly. For example, control 50 may send a signal to each sensor to determine if the particular sensor is operational. In response, the sensor may return a signal to control 50 to provide diagnostic information. Based on the returned signal, or the lack of a returned signal, control 50 may determined if each sensor is functioning properly.

As illustrated in FIG. 3, which represents further background art that is useful for understanding the invention, control 50 also includes an input device 70. Input device 70 may be a keyboard or similar device connected to or integral with control 50. Alternatively, input device 70 may be a PC or laptop computer that is separate from control 50. Using input device 70, a user may enter specified performance characteristics that are relevant to the operation of pressure relief device 12. Such performance characteristics may include, for example, the maximum allowable working pressure of the system, the rated activation pressure of the pressure relief device, temperature parameters (i.e. high and low temperatures), allowable back pressures, life cycle information, pressure relief device material information, and threshold parameters (as described in greater detail below).

Control 50 processes the monitoring signals provided by each of the sensors to determine whether an operator should be alerted to the current or past operating conditions. An operator may need to be notified when, for example, the operating conditions will impact the operation of auxiliary device 12 or when container 11 is nearly full or nearly empty of fluid. For example, in the rupture disk embodiment of FIG. 2, control 50 will identify a condition or conditions that may impact the activation pressure of the rupture disk or its longevity in service. If the operating conditions meet certain conditions, control 50 generates a warning 54 (referring to FIG. 1).

In addition, control 50 may be configured to store historical data relating to the operating conditions of container 11 and the function of auxiliary device 12 in internal or external memory 58. For example, control 50 may store a series of monitoring signals in first memory 60. The stored monitoring signals represent the system operating conditions for a recent period of time, such as, for example, the previous 15 minutes. When new monitoring signals are received, the new signals are stored in first memory 60 and the oldest signals are deleted from first memory 60. In this manner, control 50 maintains a record of the recent operating conditions experienced by auxiliary device 12. Upon receipt of a trigger signal, such as, for example, an event signal from a pressure event sensor, control 50 may transmit the history of signals stored in first memory 60 to secondary storage 62. This history of signals can then be analyzed to provide information regarding the container operating conditions immediately prior to the receipt of the trigger signal.

As also shown in the background art illustrated in FIG. 1, an alerting device 52 may be in communication with control 50. Alerting device 52 may communicate with control 50 through a hard-wire connection or through a wireless communication protocol. Alert device 52 may be any device capable or displaying or providing the warning generated by control 50. Such devices may include, for example, computer monitors, light emitting diodes, sound generating devices, pagers, Internet based services, processors with integral LCD displays, and mobile phones.

The following discussion generally describes several processing methods in which control 50 may determine that the operating condition(s) warrant the generation of a warning message, such as when the operating condition(s) will impact the operation of the pressure relief device. These processing methods are described in connection with the rupture disk background art as illustrated in FIG. 2. Similar processing methods may be used in conjunction with other types of safety devices and/or pressure information providing devices.

### Pressure Conditions

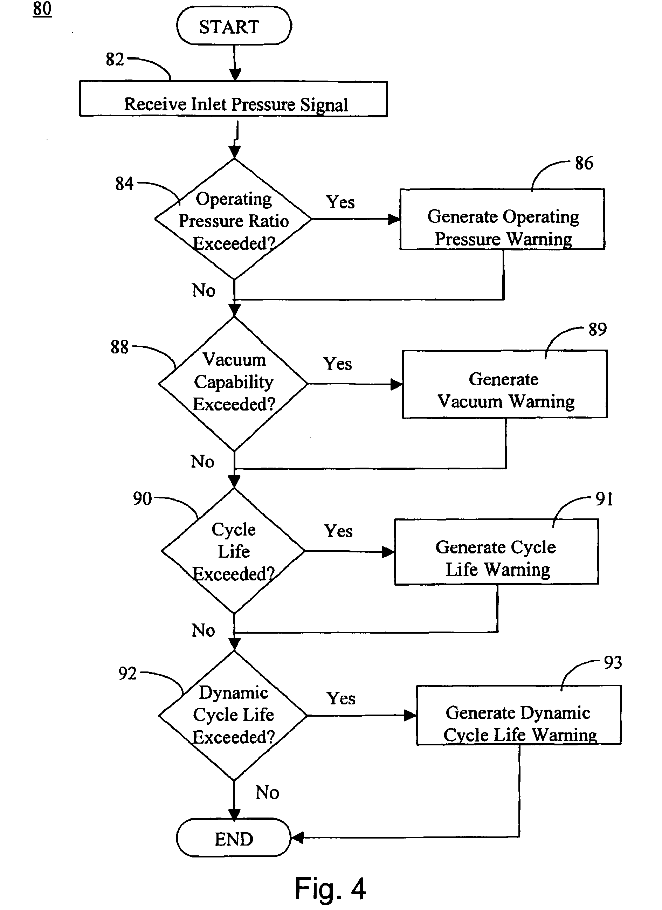

The flowchart of FIG. 4, which depicts background art useful for understanding the invention, illustrates a first exemplary method 80 of analyzing sensed pressure signals generated by first pressure sensor 44. As discussed above, control 50 receives a signal from first pressure sensor 44 that is representative of the fluid pressure on the inlet side of rupture disk 40. (Step 82).

Control 50 then determines if the operating pressure ratio of the disk has been exceeded. (Step 84) The operating pressure ratio of the rupture disk is exceeded when the pressure sensed by first pressure sensor 44 is greater than an operating pressure ratio threshold. The operating pressure threshold is typically defined as a percentage of the activation pressure of the rupture disk. Control 50 is programmed to recognize this percentage or its actual pressure value. Preferably, the information needed to determine if the operating pressure ratio is exceeded is input to control 50 as part of the performance characteristics for the particular pressure relief device during the application set up programming of the control. If the sensed pressure is greater than this threshold, an operating pressure warning is generated. (Step 86).

The generated warning may be any type of alert designed to notify an operator of a potential problem. For example, the warning may be a message displayed on a monitor, an activated light emitting diode, a sound alarm, or the activation of a remote device, such as a pager or a cellular phone. The generated warning may include a message or other indication of the operating condition that triggered the warning. For example, the operating pressure warning may include a message such as "Operating Pressure Ratio Exceeded."

Control 50 also determines if the vacuum capability of rupture disk 40 has been exceeded. (Step 88) A vacuum threshold for the particular rupture disk may be input into control 50 as part of the performance characteristics or a default value may be used. If the pressure sensed by first pressure sensor 44 is below the vacuum threshold, a vacuum warning is generated (step 89) to alert an operator to the vacuum condition.

Control 50 also determines if the cycle life of rupture disk 40 has been exceeded. (Step 90). A "pressure cycle" occurs when the pressure of the system fluctuates between a lower and an upper value. The parameters defining the upper value may be input into control 50 or default values used. When a pre-determined number of pressure cycles have been experienced, control 50 will generate a "cycle life exceeded" warning. (Step 91).

The number of "pressure cycles" experienced by rupture disk 40 may be calculated in several different ways. In one example, a cycle count will be incremented when rupture disk 40 experiences a pressure fluctuation from the lower threshold to upper threshold and back to the lower threshold. Alternatively, the cycle count may be incremented when rupture disk 40 experiences a pressure fluctuation from the upper threshold to the lower threshold and back to a upper threshold.

Control 50 may also store a "hysteresis" value for cycle counting purposes. The "hysteresis" value identifies a pressure change that may impact the cycle life of the rupture disk but does not meet the threshold criteria described above. When the rupture disk 40 experiences a pressure fluctuation that is within the upper and lower thresholds and is greater than the hysteresis value, this pressure fluctuation may be counted as a cycle. For example, a rupture disk may have a lower cycle threshold of 75 psi, an upper cycle threshold of 92 psi, and a hysteresis value of 10 psi. Each time that the pressure within the system fluctuates by 10 psi but does not reach either 75 psi or 92 psi, the cycle count may be incremented. With this approach, all pressure fluctuations that may have an impact on the cycle life of rupture disk 40 will be counted.

Control 50 further determines if the dynamic cycle life is exceeded. (Step 92). The dynamic cycle life is a measure of the number of times the pressure differential across the disk changes from negative to positive or from positive to negative. The values defining the dynamic cycle life may be input into control 50 or default values may be used. Control 50 maintains a count of the number of times the pressure sensed by first pressure sensor 44 changes from positive to negative or negative to positive. After a pre-determined number of changes, control 50 issues a "dynamic cycle life exceeded" warning. (Step 93).

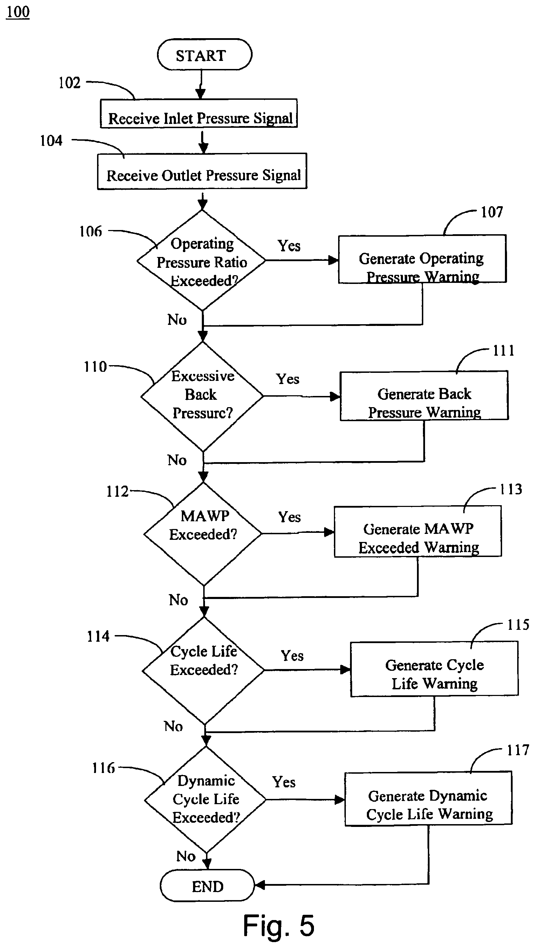

The flowchart of FIG. 5, which depicts background art useful for understanding the invention, illustrates a second exemplary background method 100 of analyzing sensed pressure signals from both first pressure sensor 44 and second pressure sensor 45. As discussed above, control 50 receives a signal from first pressure sensor 44 that is representative of the fluid pressure on the inlet side of rupture disk 40 (step 102) and a signal from second pressure sensor 45 that is representative of the fluid pressure on the outlet side of rupture disk 40 (step 104).

Control 50 determines if the operating pressure ratio has been exceeded. (Step 106). When both the inlet and outlet pressure signals are received, control 50 determines if the pressure differential, i.e. inlet pressure-outlet pressure, exceeds the operating pressure ratio threshold. As noted above, the operating pressure ratio is determined as a percentage of the activation pressure of rupture disk 40. The parameters defining the operating pressure ratio threshold may be input into control 50 or default values may be used. If the pressure differential exceeds the operating pressure ratio threshold, an "operating pressure ratio" warning is generated. (Step 107).

Control 50 may also determine if there is an excessive back pressure. (Step 110). An excessive back pressure may exist if the pressure sensed by second pressure sensor 45 is above a certain level. An excessive back pressure may also exist if the pressure differential over rupture disk 40 is negative, i.e. the outlet pressure is greater than the inlet pressure, and the negative pressure differential exceeds a predetermined limit. Parameters defining the back-pressure conditions may be input into control 50 or default values may be used. If either of the back-pressure conditions exist, a "back pressure" warning is generated. (Step 111).

Control 50 may also determine if the maximum allowable working pressure of the system is being exceeded. (Step 112) As described previously, rupture disk 40 will activate when the pressure differential across the rupture disk is greater than the activation pressure. If a sufficient back pressure is exerted on the rupture disk, it is possible that the inlet pressure may rise above the maximum allowable working pressure without activation of the rupture disk. This condition could place the entire system at risk. If this condition is detected, control 50 generates a "MAWP exceeded" warning. (Step 113).

Control 50 also determines if the cycle life is exceeded. (Step 114). A "pressure cycle" may also occur when the pressure differential over rupture disk 40 cycles between a lower threshold and an upper threshold. The parameters defining the upper and lower threshold may be input into control 50 or default values may be used. After a certain number of pressure cycles are experienced, control 50 will generate a "cycle life exceeded" warning. (Step 115).

Control 50 may also determine if the dynamic cycle life is exceeded. (Step 92). As noted above, the dynamic cycle life is measured as the number of times the pressure differential across the disk changes from negative to positive or from positive to negative. Control 50 maintains a count of the number of times the pressure differential changes from positive to negative or negative to positive. After a pre-determined number of changes, control 50 issues a "dynamic cycle life exceeded" warning. (Step 117).

Control 50 may also use the information provided by the pressure and temperature sensors to drive a controlled safety pressure relief system ("CSPRS"). If the monitored conditions indicate an impending over-pressure condition, control 50 may activate the CSPRS to alleviate or prevent the over-pressure condition. The activation of the CSPRS may result in the opening of a control valve that injects a chemical reaction agent, heat absorbing medium, fire suppressant medium, catalyst, or stabilizer into the working fluid or in the activation of a valve, such as, for example, a butterfly valve or globe valve, that will allow the release of fluid in a sufficient quantity to avoid or limit the over-pressure or under-pressure condition. Control 50 may also generate an appropriate warning to alert an operator to the activation of the CSPRS.

### Temperature Conditions

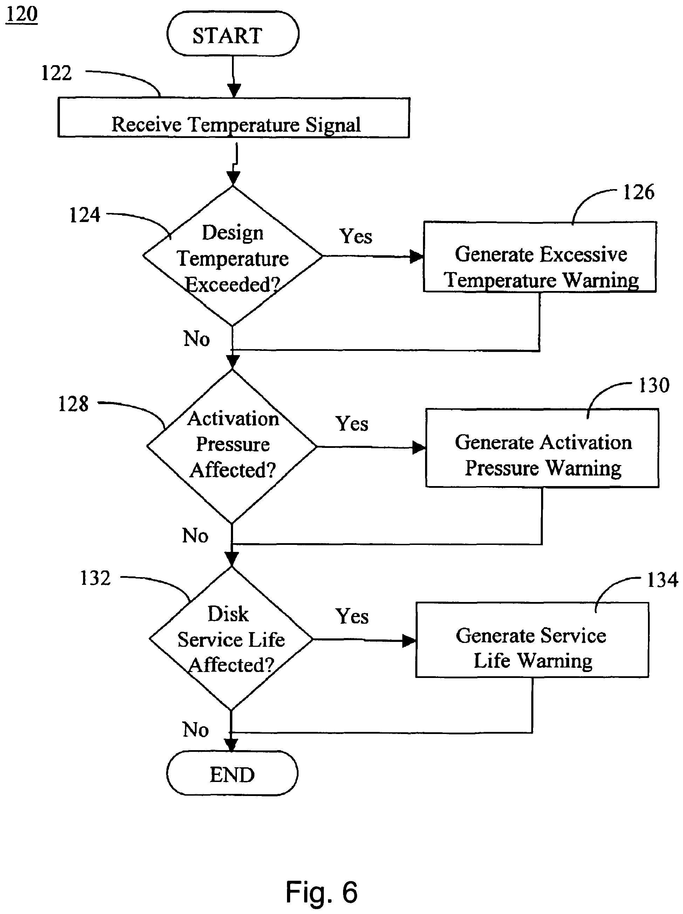

The flowchart of FIG. 6, which depicts background art useful for understanding the invention, illustrates an exemplary method 120 of analyzing sensed temperature signals generated by temperature sensor 46. As discussed above, control 50 receives a signal from temperature sensor 46 that is representative of the fluid temperature on the inlet side of rupture disk 40. (Step 122).

Control 50 determines if the design temperature is exceeded. (Step 124). The design temperature is exceeded if the sensed temperature is greater than an upper threshold or is less than a lower threshold. These thresholds may be input into control 50 or default values used. Under either condition, control 50 will generate an "excessive temperature" warning. (Step 126).

Control 50 may also determine if the temperature of the fluid in the system will affect the activation pressure of rupture disk 40. (Step 128). The activation pressure of rupture disk 40 may be affected if the temperature of the fluid in the system deviates from a certain limit. The type of material used in rupture disk 40 may be stored in the memory of control 50 along with a pressure/temperature curve for the particular material. The pressure/temperature curve identifies the amount of change in the activation pressure of the rupture disk over a range of temperatures. If control 50 determines that the current temperature of the system will increase the activation pressure of the rupture disk by a certain percentage, such as, for example, 5%, an "activation pressure affected" warning is generated. (Step 130).

Control 50 may also determine if the temperature of the fluid in the system will affect the service life of rupture disk 40. (Step 132). The service life of rupture disk 40 may be affected if the temperature of the fluid in the system is above a certain limit. A higher than expected temperature may cause the rupture disk to activate at a lower pressure, or pressure differential. Control 50 uses the stored pressure/temperature curve for the particular rupture disk material to determine if the activation pressure of the rupture disk will be decreased by a certain percentage, such as, for example, 5%. If this condition exists, control 50 generates a "service life affected" warning. (Step 134).

Control 50 may use a combination of the pressure and temperature determinations described above to identify additional conditions that would require a warning to be generated. For example, if the fluid temperature in the system rose to a limit that would result in a decrease in the activation pressure, control may use the decreased activation pressure as the basis for operating pressure ratio threshold calculation. In this scenario, the operating pressure ratio threshold would be also be decreased to account for the decreased activation pressure. The decrease in the operating pressure ratio threshold may be proportional to the decrease in activation pressure.

### Activation Conditions

Control 50 may also generate one or more warnings in response to received signals that indicate rupture disk 40 has experienced a pressure event, such as, for example, activation or leaking. As described in greater detail below, these conditions are identified by signals received from one or more of pressure event sensor 42, first pressure sensor 44, and second pressure sensor 45.

When control 50 receives a signal from pressure event sensor 42 that the rupture disk has activated, control 50 verifies that the activation signal is accurate, Control 50 will verify that the sensed pressures on the inlet side and/or the outlet side of rupture disk 40 support the activation signal. For example, a condition where the outlet pressure is at or near atmospheric pressure might indicate that the activation signal was erroneous. In addition, a condition where the inlet pressure does not drop in accordance might also indicate that the activation signal was erroneous. Control 50 may generate a warning to indicate that an activation signal was generated from pressure event sensor 42, but that the pressure readings do not support the activation signal. If the pressure readings do support the activation signal, i.e. the inlet pressure drops and the outlet pressure rises, control 50 may generate a warning that the rupture disk has activated.

Control 50 may also identify a condition where rupture disk 40 has activated, but no activation signal was provided by pressure event sensor 42. This condition may occur in the case of a low pressure rupture, where the fluid flow is not great enough to trigger pressure event sensor 42. This condition might be identified by a drop in inlet pressure accompanied by a rise in outlet pressure. If this condition is detected, control 50 will generate an appropriate warning.

### Additional Conditions

Control 50 may also identify additional conditions, such as a suspected rupture disk malfunction. Some rupture disks have a damage ratio that is greater than 1. This indicates that a damaged rupture disk will activate at a pressure that is higher than the rated activation pressure. Control 50 may identify this condition when the inlet pressure or pressure differential, as sensed by first pressure sensor 44 and second pressure sensor 45, exceeds the rated activation pressure by a certain percentage, such as, for example 110%. When this condition is identified, control 50 will generate an appropriate warning.

Control 50 may also alert an operator when container 11 is nearly full or nearly empty of fluid. A sensor, such as, for example, a pressure switch or a pressure indicator, may be connected to container 11 to monitor the fluid level within the container. When the sensor determines that the fluid level in container 11 is approaching a maximum or a minimum, the sensor may send a signal to control 50 indicate an impending over-pressure or under-pressure condition. The signal may be transmitted to control 50 through the wireless communication system described previously. Upon receipt of the signal, control 50 may generate an an appropriate warning for the operator. The operator may then open a supply valve to replenish the fluid supply in container 11 or shut of a supply valve to stop the flow of fluid to container 11. For example, if container 11 is used to feed a process, control 50 may generate a warning when the fluid level within container 11 is nearly depleted. Similarly, if container 11 is receiving fluid from a supply tank, control 50 may generate a warning when container 11 has received its required supply of fluid. It is also contemplated that control 50 may be integrated with the supply system to automatically close or open valves to relieve or prevent the over-pressure or under-pressure condition.

### Controlled Operation of Non-Reclosing Pressure Release Devices

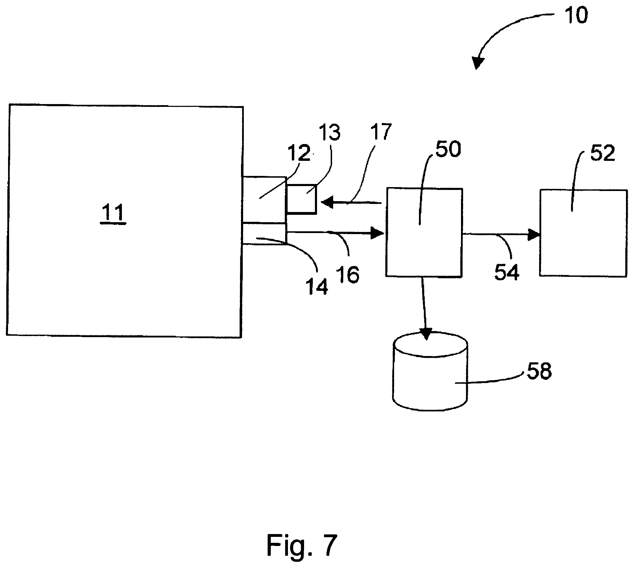

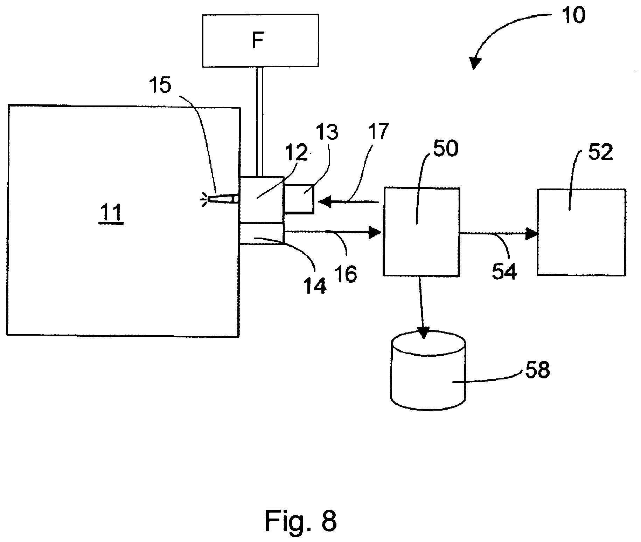

Reference will now be made in detail to an embodiment of the present invention, see FIG. 7, and examples useful for understanding the invention, see Figures 8-10. Wherever possible, the same reference numbers will be used throughout the drawings to refer to the same or like parts. As noted above, auxiliary device 12 may be a non-reclosing pressure release device. Such non-reclosing pressure release devices cannot reclose automatically after opening, and must be replaced or reset after opening prior to further use. Examples of such non-reclosing pressure release devices include explosion panels, buckling-pin valves, breaking-pin valves and rupture disks such as those illustrated in FIG. 2. In a system including a non-reclosing pressure release device, an activating mechanism 13 may also be provided, as shown in FIG. 7. The activating mechanism 13 may be operably engaged with the non-reclosing pressure release device 12, so that the activating mechanism 13 can open the non-reclosing pressure release device 12 upon activation. Examples of activating mechanisms 13 that can be used in this system include electric actuators, pneumatic actuators, spring loaded actuators, pyrotechnic devices, and solenoids. Another suitable activating mechanism comprises a gas generator configured to power a piston. When such an activating mechanism activates, the gas generator causes the piston to move, thereby opening the non-reclosing pressure release device. It may also be desirable to provide a second activating mechanism of the type already described. Where a second activating mechanism is provided, it may activate to open the non-reclosing pressure release device 12 in the event that the first activating mechanism fails to activate properly.

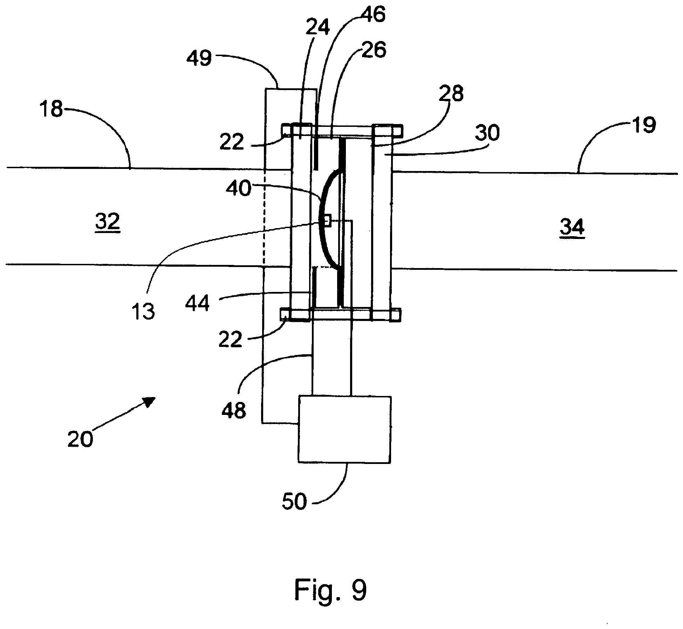

One example useful for understanding the invention of a controlled non-reclosing pressure release device is illustrated in FIG. 9. An activation mechanism 13 is operably connected to a rupture disk 40, which may be similar to the rupture disk illustrated in FIG. 2. The activation mechanism 13 may be, for example, a pyrotechnic device. When a pressure sensor 48 or the temperature sensor 46 measures a predetermined condition, the controller 50 may activate the activation mechanism 13. In this system, the pressure sensor 48 and temperature sensor 46 of the monitoring system described above. When the activation mechanism 13 is activated, it causes the rupture disk 40 to rupture, releasing pressure into the outlet pipe 19.

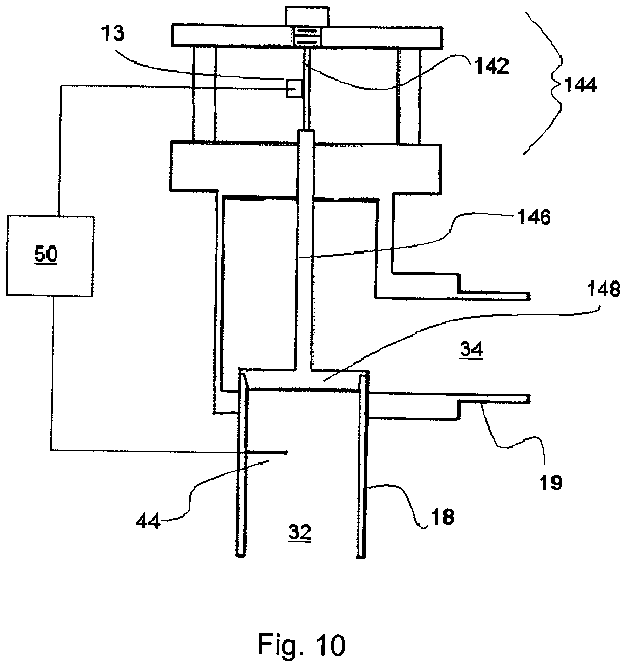

Another example of a controlled non-reclosing pressure release device useful for understanding the invention is illustrated in FIG. 10. A pin 142 is provided within a pin mount 144 as is well known in the art. The pin 142 may be a buckling pin, shear pin, breaking pin, or any other suitable pin. Activation mechanism 13 is mounted in operative association with the pin 142. When pressure sensor 44 (or any other appropriate sensor) senses a predetermined condition, controller 50 may cause activation mechanism 13 to be activated. When activated, activation mechanism 13 causes the pin 142 to fail, thereby allowing the piston 146 and valve 148 to move away from inlet pipe 18. Once valve 148 separates from inlet 18, pressure is allowed to escape through outlet pipe 19.

The control 50 in a controlled pressure release system may monitor a signal 16 from a sensor 14. The signal 16 may indicate an operating condition of the pressurized system including, e.g., pressure or temperature. When the control 50 detects a signal 16 indicating a predetermined condition, it may send a signal 17 to the activating mechanism 13, thereby causing the activating mechanism to activate and open the non-reclosing pressure release device. Control 50 may be configured to activate the activating mechanism 13 in response to a number of predetermined conditions, including conditions that may adversely affect the performance of the pressurized system, the sensor, or the pressure release device. In one embodiment, control 50 may be configured to compare at least one operating condition of the pressurized container to at least one performance characteristic of the pressure release device.

In another example useful for understanding the invention, shown in FIG. 8, a non-reclosing pressure release device 12 may be configured to inject a fluid F into the pressurized container via nozzle 15 when the non-reclosing pressure release device 12 is opened. The non-reclosing pressure release device 12 may include, for example, the rupture disk 40 illustrated in FIG. 9 or the buckling pin valve illustrated in FIG. 10. According to this embodiment, once the pressure release device 12 is opened, fluid F is injected or allowed to flow into pressurized container 11. In this embodiment, the fluid may be selected for its ability to reduce pressure in the pressurized container. Suitable fluids may include chemical reaction agents, heat absorbing media, fire suppressant media, catalysts, and stabilizers.

Activation mechanism 13 may also be activated by a trigger that may be operated manually or by an independent system, as is well known in the art. An operator or an independent system may monitor a signal from the sensor, and make a decision to operate the trigger once a predetermined condition of the pressurized container is observed. The trigger may thus be operated manually, by an operator, or automatically, by an independent system. Additionally, the trigger may be operated by a remote control as is well known in the art.

In one embodiment, a controlled pressure release system may use the control 50 of the monitoring system described above. In such an embodiment, the control 50 may be configured to monitor the activation of the activating mechanism 13. Additionally, the alerting device 52 of the monitoring system may be provided. The control 50 may be configured to generate a warning, through the alerting device 52, when the activating mechanism 13 activates or fails to activate properly. The control 50 may be further configured to provide a signal to initiate shutdown of a process utilizing the pressurized container 11 when the activating mechanism 13 fails to activate properly.

According to an additional embodiment, the non-reclosing pressure release device 12 may be configured to activate automatically in response to a second predetermined pressure. In this embodiment, the non-reclosing pressure release device 12 provides an additional level of safety. If, for example, the activating mechanism 13 fails to activate properly at a predetermined first pressure condition, then the non-reclosing pressure release device 12 may automatically activate at a second predetermined pressure condition.

As will be apparent from the foregoing disclosure, the controlled pressure release system of the present disclosure may open a non-reclosing pressure release device based on the operating conditions of a pressurized container. The system of the present invention triggers an activating mechanism to open a non-reclosing pressure release device in order to ensure the integrity and operation of the pressurized system.

It will be apparent to those skilled in the art that various modifications and variations can be made in construction of the controlled pressure release system without departing from the scope of the present invention, which is defined by the following claims. Other embodiments of the invention will be apparent to those skilled in the art from consideration of the specification and practice of the disclosure herein. It is intended that the specification and examples be considered as exemplary only, with a true scope of the invention being indicated by the following claims.

## Claims

1. A controlled pressure release system for a pressurized container comprising:
a pressure release device (12, 40, 142, 146, 148);
an activating mechanism (13) configured to open the pressure release device (12, 40, 142, 146, 148) upon activation;
a sensor (44) operatively disposed in the pressurized container, the sensor (44) configured to generate a monitoring signal representative of at least one operating condition of the pressurized container; and
a control (50) configured to receive the monitoring signal and to activate the activating mechanism (13) when the at least one operating condition of the pressurized container reaches a predetermined limit,
**characterized in that**
the pressure release device (12, 40, 142 146, 148) is a non-reclosing pressure release device, and **in that** the activating mechanism (13) is operably engaged with the pressure release device (12, 40, 142, 146, 148) prior to activation and
the activating mechanism (13) is a first activating mechanism (13), the system further comprising a second activating mechanism (13), the second activating mechanism being configured to open the pressure release device (12, 40, 142, 146, 148) in the event that the first activating mechanism (13) fails to activate properly.

2. The system of claim 1, wherein the non-reclosing pressure release device (12, 40, 142 146, 148) is selected from the group consisting of a rupture disk, an explosion panel, a buckling pin valve, and a breaking pin valve.

3. The system of claim 1, wherein the activating mechanism (13) is selected from the group consisting of an electric actuator, a pneumatic actuator, a spring-loaded actuator, a pyrotechnic device, and a solenoid.

4. The system of claim 1, wherein the activating mechanism (13) further comprises:
a gas generator; and
a piston.

5. The system of claim 1, wherein the control (50) is configured to compare at least one operating condition of the pressurized container to at least one performance characteristic of the pressure release device (12 , 40, 142, 146, 148).

6. The system of claim 5, wherein the control (50) is further configured to generate a warning when the at least one operating condition exceeds at least one design specification of the pressure release device (12, 40, 142, 146, 148).

7. The system of claim 1 wherein the pressure release device (12, 40, 142, 146, 148) is configured to automatically activate at a predetermined response pressure in the event that the activating mechanism (13) fails to function.

8. A controlled pressure release system according to claim 1, further comprising: a trigger configured to activate the activation mechanism (13).

9. The system of claim 8, wherein the trigger is operated manually.

10. The system of claim 8, further comprising a remote control, wherein the remote control is configured to operate the trigger.

## Patentansprüche

1. Kontrolliertes Druckentlastungssystem für einen Druckbehälter, umfassend:
eine Druckentlastungsvorrichtung (12, 40, 142, 146, 148);
einen Aktivierungsmechanismus (13), der dazu eingerichtet ist, die Druckentlastungsvorrichtung (12, 40, 142, 146, 148) bei Aktivierung zu öffnen;
einen Sensor (44), der betriebsmäßig in dem Druckbehälter angeordnet ist, wobei der Sensor (44) dazu eingerichtet ist, ein Überwachungssignal zu erzeugen, das für wenigstens einen Betriebszustand des Druckbehälters repräsentativ ist; und
eine Steuerung (50), die dazu eingerichtet ist, das Überwachungssignal zu empfangen und den Aktivierungsmechanismus (13) zu aktivieren, wenn der wenigstens eine Betriebszustand des Druckbehälters eine vorbestimmte Grenze erreicht,
**dadurch gekennzeichnet, dass**
die Druckentlastungsvorrichtung (12, 40, 142, 146, 148) eine nicht wiederschließende Druckentlastungsvorrichtung ist, und dadurch, dass der Aktivierungsmechanismus (13) betriebsmäßig mit der Druckentlastungsvorrichtung (12, 40, 142, 146, 148) vor der Aktivierung in Eingriff steht, und
der Aktivierungsmechanismus (13) ein erster Aktivierungsmechanismus (13) ist, wobei das System weiterhin einen zweiten Aktivierungsmechanismus (13) umfasst, wobei der zweite Aktivierungsmechanismus dazu eingerichtet ist, die Druckentlastungsvorrichtung (12, 40, 142, 146, 148) für den Fall zu öffnen, dass der erste Aktivierungsmechanismus (13) nicht richtig aktiviert wird.

2. System nach Anspruch 1, bei dem die nicht wiederschließende Druckentlastungsvorrichtung (12, 40, 142, 146, 148) aus der Gruppe ausgewählt ist, die aus einer Berstscheibe, einer Explosionsplatte, einem Knickstiftventil und einem Bruchstiftventil besteht.

3. System nach Anspruch 1, bei dem der Aktivierungsmechanismus (13) aus der Gruppe ausgewählt ist, die aus einem elektrischen Stellglied, einem pneumatischen Stellglied, einem federbelasteten Stellglied, einer pyrotechnischen Vorrichtung und einem Solenoid besteht.

4. System nach Anspruch 1, bei dem der Aktivierungsmechanismus (13) weiterhin umfasst:
einen Gasgenerator; und
einen Kolben.

5. System nach Anspruch 1, bei dem die Steuerung (50) dazu eingerichtet ist, wenigstens einen Betriebszustand des Druckbehälters mit wenigstens einem Leistungsmerkmal der Druckentlastungsvorrichtung (12, 40, 142, 146, 148) zu vergleichen.

6. System nach Anspruch 5, bei dem die Steuerung (50) weiterhin dazu eingerichtet ist, eine Warnung zu erzeugen, wenn der wenigstens eine Betriebszustand wenigstens eine Auslegungsspezifikation der Druckentlastungsvorrichtung (12, 40, 142, 146, 148) überschreitet.

7. System nach Anspruch 1, bei dem die Druckentlastungsvorrichtung (12, 40, 142, 146, 148) so konfiguriert ist, dass sie bei einem vorbestimmten Ansprechdruck automatisch aktiviert wird, falls der Aktivierungsmechanismus (13) nicht funktioniert.

8. Gesteuertes Druckentlastungssystem nach Anspruch 1, weiterhin umfassend: einen Auslöser, der dazu eingerichtet ist, den Aktivierungsmechanismus (13) zu aktivieren.

9. System nach Anspruch 8, bei dem der Auslöser manuell betätigt wird.

10. System nach Anspruch 8, weiterhin umfassend eine Fernbedienung, wobei die Fernbedienung dazu eingerichtet ist, den Auslöser zu betätigen.

## Revendications

1. Système de libération de pression commandée pour un conteneur sous pression comprenant :
un dispositif de libération de pression (12, 40, 142, 146, 148) ;
un mécanisme d'activation (13) configuré pour ouvrir le dispositif de libération de pression (12, 40, 142, 146, 148) lors d'une activation ;
un capteur (44) disposé de manière opérationnelle dans le conteneur sous pression, le capteur (44) étant configuré pour générer un signal de surveillance représentatif d'au moins une condition de fonctionnement du conteneur sous pression ; et
une commande (50) configurée pour recevoir le signal de surveillance et pour activer le mécanisme d'activation (13) lorsque la au moins une condition de fonctionnement du conteneur sous pression atteint une limite prédéterminée,
**caractérisé en ce que**
le dispositif de libération de pression (12, 40, 142 146, 148) est un dispositif de libération de pression non-refermable, et **en ce que** le mécanisme d'activation (13) vient en prise de manière opérationnelle avec le dispositif de libération de pression (12, 40, 142, 146, 148) avant l'activation et
le mécanisme d'activation (13) est un premier mécanisme d'activation (13), le système comprenant en outre un second mécanisme d'activation (13), le second mécanisme d'activation étant configuré pour ouvrir le dispositif de libération de pression (12, 40, 142, 146, 148) dans le cas où le premier mécanisme d'activation (13) échouerait à s'activer correctement.

2. Système selon la revendication 1, dans lequel le dispositif de libération de pression non-refermable (12, 40, 142 146, 148) est sélectionné parmi le groupe constitué d'un disque de rupture, d'un panneau d'explosion, d'une soupape à goupille de flambage, et d'une soupape à goupille de fracture.

3. Système selon la revendication 1, dans lequel le mécanisme d'activation (13) est sélectionné parmi le groupe constitué d'un actionneur électrique, d'un actionneur pneumatique, d'un actionneur à ressort, d'un dispositif pyrotechnique, et d'un solénoïde.

4. Système selon la revendication 1, dans lequel le mécanisme d'activation (13) comprend en outre :
un générateur de gaz ; et
un piston.

5. Système selon la revendication 1, dans lequel la commande (50) est configurée pour comparer au moins une condition de fonctionnement du conteneur sous pression à au moins une caractéristique de performance du dispositif de libération de pression (12, 40, 142, 146, 148).

6. Système selon la revendication 5, dans lequel la commande (50) est en outre configurée pour générer un avertissement lorsque la au moins une condition de fonctionnement dépasse au moins une spécification de conception du dispositif de libération de pression (12, 40, 142, 146, 148).

7. Système selon la revendication 1, dans lequel le dispositif de libération de pression (12, 40, 142, 146, 148) est configuré pour s'activer automatiquement à une pression de réponse prédéterminée dans le cas où le mécanisme d'activation (13) échouerait à fonctionner.

8. Système de libération de pression commandée selon la revendication 1, comprenant en outre : un déclencheur configuré pour activer le mécanisme d'activation (13).

9. Système selon la revendication 8, dans lequel le déclencheur est actionné manuellement.

10. Système selon la revendication 8, comprenant en outre une télécommande, dans lequel la télécommande est configurée pour actionner le déclencheur.
